# FASCICULE DE BREVET EUROPEEN

(11) **EP 3 181 414 B1**
(45) Date de publication et mention de la délivrance du brevet: **12.09.2018**
(21) Numéro de dépôt: 16200762.9
(22) Date de dépôt: 25.11.2016
(51) Int. Cl.: B60S 1/04

(54) **MOTO-RÉDUCTEUR D'ESSUIE-GLACE**
GETRIEBEMOTOR FÜR SCHEIBENWISCHER
GEARED MOTOR UNIT FOR WINDSCREEN WIPER

(30) Priorité: 18.12.2015 FR 1562770
(43) Date de publication de la demande: 21.06.2017
(73) Titulaire: Valeo Systèmes d'Essuyage, 78322 Le Mesnil Saint Denis (FR)
(72) Inventeur: GUIBERT, Yannick, 86100 CHATELLERAULT (FR); SANON, Anne, 78280 Guyancourt (FR); AUTRET, Véronique, 92410 VILLE D'AVRAY (FR)
(74) Mandataire: Callu-Danseux, Violaine

(56) Documents cités:
- FR-A1- 2 853 606
- FR-A1- 2 951 991
- FR-A1- 3 003 935
- GB-A- 2 306 617

## Description

La présente invention concerne le domaine des essuie-glaces et plus particulièrement des moto-réducteurs d'essuie-glaces destinés à entraîner les balais d'essuie-glaces.

Les moto-réducteurs comprennent un moteur, généralement électrique, logé dans une carcasse et un réducteur comprenant un mécanisme à engrenages reliant l'axe de rotation du moteur à un axe de sortie du moto-réducteur sur lequel est fixé le bras de l'essuie-glace. Le mécanisme à engrenages est monté dans un logement d'un socle sur lequel est fixé le moteur. Le socle est réalisé en métal et/ou en plastique et permet la protection du mécanisme du réducteur, la transmission des efforts entre les deux axes formant le moto-réducteur, et permet éventuellement de loger un mécanisme bielle-manivelle de transformation d'un mouvement de rotation en mouvement alternatif. Le socle est fixé à un élément de structure du véhicule, généralement par le biais d'une plaque de fixation ou une plaque de fermeture du socle via des vis de maintien.

Un problème lié aux moto-réducteurs concerne les vibrations et bruits qu'ils peuvent produire. En effet, l'acoustique apparaît comme un élément de confort essentiel dans les véhicules automobiles actuels de sorte qu'il devient nécessaire d'empêcher la transmission des vibrations et sons produits par un moto-réducteur de se transmettre aux autres éléments du véhicule et notamment à l'habitacle. Pour cela, il convient de découpler mécaniquement et acoustiquement le moto-réducteur du reste du véhicule de manière à isoler les vibrations et le bruit du moto-réducteur. L'une des solutions connues pour surmonter ce problème est l'utilisation de plots amortisseurs positionnés à l'interface entre le moto-réducteur et la structure du véhicule.

Cependant, il se peut que la réduction des vibrations procurée par les plots amortisseurs soit insuffisante par rapport à la réduction désirée. De plus, les plots amortisseurs ne permettent pas d'atténuer le bruit émis par le moto-réducteur.

Afin de surmonter au moins partiellement ces inconvénients, la présente invention concerne un moto-réducteur pour système d'essuyage de véhicule automobile, le moto-réducteur comprenant un moteur électrique logé dans une carcasse, un mécanisme réducteur relié au moteur électrique, un socle recevant le mécanisme réducteur et une plaque de fixation et/ou une plaque de fermeture destinée à être fixée d'une part au socle, et d'autre part à un élément de structure du véhicule, dans lequel au moins un élément parmi :
- la plaque de fixation,
- la plaque de fermeture,
- le socle et,
- la carcasse,
est constitué d'un matériau composite feuilleté comprenant au moins deux couches de matériau et dont au moins une des couches est réalisée dans un matériau viscoélastique, c'est à dire un matériau avec un fort coefficient d'amortissement sur une certaine plage fréquentielle.

Un exemple de matériau composite feuilleté est décrit dans le document FR2951991A1

FR 2 853 606 A montre un système moto-réducteur pour essuie glace selon le préambule de la première revendication. Préférentiellement, le matériau composite feuilleté comprend au moins trois couches de matériau.

L'utilisation d'une plaque de fixation et/ou d'une plaque de fermeture et/ou d'un socle et/ou d'une carcasse comprenant une couche réalisée dans un matériau viscoélastique permet de réaliser un découplage vibratoire entre le moto-réducteur et le reste du véhicule.

Selon un autre aspect de la présente invention, le matériau composite feuilleté comprend une première et une deuxième couches externes et au moins une couche intermédiaire en matériau viscoélastique.

Les couches externes permettent de maintenir la couche en matériau viscoélastique et d'apporter une raideur statique et dynamique à la plaque de fixation et/ou de fermeture.

Selon un aspect supplémentaire, le matériau viscoélastique a un facteur d'amortissement tangente δ supérieur à 0,1 à 200Hz dans une plage de température comprise entre 20 et 80°C pour une sollicitation de type moto-réducteur, les deux couches externes ayant un facteur d'amortissement tangente δ inférieur à 0,1 pour les mêmes conditions de mesure.

Selon un autre aspect, le rapport entre l'épaisseur de la couche intermédiaire et celle de la couche externe la moins épaisse sera comprise entre 0,03 et 0,6.

Selon un aspect supplémentaire, la première et la deuxième couches externes ont des épaisseurs différentes.

L'utilisation de couches d'épaisseurs différentes permet d'optimiser la filtration des vibrations dans une gamme de fréquence plus étendue.

Selon un aspect additionnel, l'une des couches externes est au moins deux fois plus épaisse que l'autre.

Selon un autre aspect, au moins une des couches est métallique.

L'utilisation d'une couche métallique permet de filtrer également les ondes électromagnétiques et d'améliorer la compatibilité électromagnétique entre le moto-réducteur et le reste du véhicule.

Selon un aspect supplémentaire, au moins une des couches est en acier ou en alliage acier/aluminium.

Selon un aspect additionnel, la plaque de fixation ou la plaque de fermeture comprend au moins une ouverture pour permettre la fixation de ladite plaque de fixation ou de ladite plaque de fermeture a un élément de structure du véhicule automobile.

L'ouverture est par exemple de type trou, encoche, demi lune, etc...

Selon un aspect additionnel, la plaque de fermeture est fixée au socle et ferme un logement du socle dans lequel est placé le mécanisme réducteur. La plaque de fermeture peut également assurer une étanchéité acoustique, par exemple par le biais d'un joint disposé entre le socle et la plaque de fermeture.

Selon un aspect supplémentaire, le moto-réducteur comprend également un capot fixé au socle pour fermer le logement du socle dans lequel est placé le mécanisme réducteur et dans lequel la plaque de fixation est fixé au socle ou au capot, ledit capot comprenant un matériau composite feuilleté dont au moins une des couches est réalisée dans un matériau viscoélastique.

D'autres caractéristiques et avantages de l'invention ressortiront de la description suivante, donnée à titre d'exemple et sans caractère limitatif, en regard des dessins annexés sur lesquels :
- la figure 1 représente une vue éclatée d'un équipement d'essuie-glace comprenant un moto-réducteur d'un premier type associé à un dispositif de timonerie reliant le moto-réducteur aux bras d'essuie-glace ;
- la figure 2 représente un schéma d'un premier mode de réalisation d'un moto-réducteur selon le premier type ;
- la figure 3 représente un schéma en coupe selon l'épaisseur d'un matériau composite feuilleté selon un mode de réalisation de la présente invention ;
- la figure 4 représente un schéma d'un deuxième mode de réalisation d'un moto-réducteur selon le premier type ;
- La figure 5 représente un schéma d'un premier côté d'un moto-réducteur d'un deuxième type ;
- La figure 6 représente un schéma d'un deuxième côté d'un moto-réducteur d'un deuxième type ;

Sur toutes les figures, les éléments ayant des fonctions identiques portent les mêmes numéros de référence.

Dans la suite de la description, le terme « ouverture », associé notamment à une plaque, désigne une interface mécanique obtenue par une absence de matière comme par exemple un trou ménagé dans la plaque ou une encoche, notamment en forme de demi-lune, ménagée sur un bord de la plaque.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

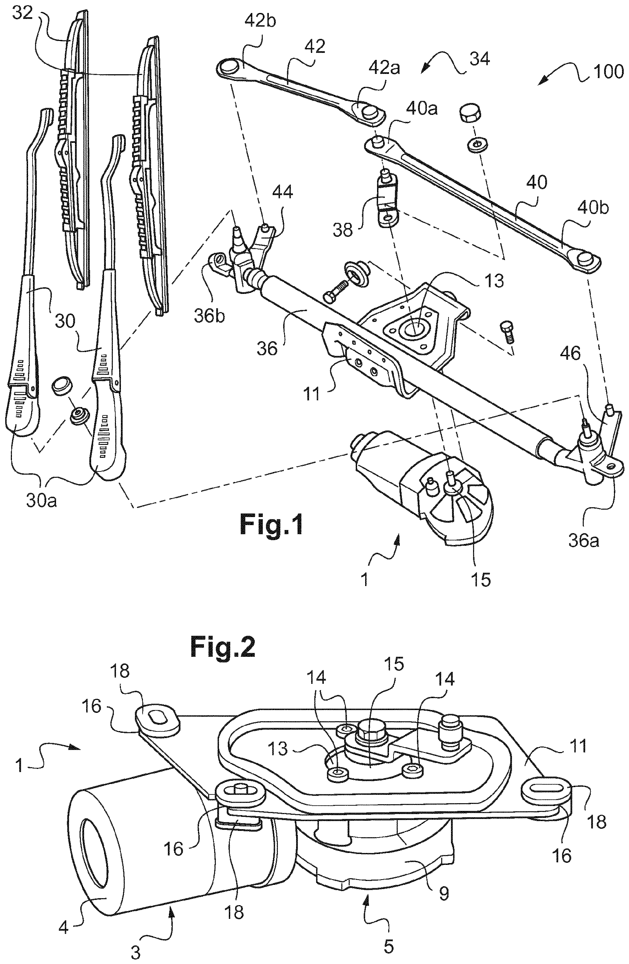

La figure 1 représente une vue éclatée d'un système d'essuie-glace 100 comprenant un moto-réducteur 1, des bras d'essuie-glace 30 à l'extrémité desquels sont montés articulés des balais d'essuie-glace 32 et une timonerie 34 permettant de transmettre le mouvement de l'arbre de sortie 15 du moto-réducteur 1 vers les bras d'essuie-glace 30 pour entraîner les bras d'essuie-glace 30 en pivotement. La timonerie 34 relie par exemple les deux bras d'essuie-glace 30 situés sur le pare-brise à l'avant du véhicule, au moto-réducteur 1 pour entraîner le balayage alterné des balais d'essuie-glace 32 conducteur et passager. Pour cela, la timonerie 34 comporte comme éléments : un tube support 36, une manivelle moteur 38, deux biellettes 40, 42 dont une biellette « maître » côté conducteur et une biellette « esclave » côté passager, et deux leviers 44, 46 montés rotatif sur les extrémités du tube support 36.

Une première extrémité de la manivelle moteur 38 est fixée à l'arbre de sortie 15 du moto-réducteur 1, par exemple par un montage « serré ». Une deuxième extrémité de la manivelle moteur 38 est articulée avec les premières extrémités 40a, 42a des biellettes 40, 42, par exemple via deux montages «rotule-réceptacle». Les deuxièmes extrémités 40b, 42b des biellettes 40, 42 sont articulées à des premières extrémités d'un levier respectif 44, 46, par exemple par un montage «rotule-réceptacle». Les deuxièmes extrémités des leviers 44, 46 sont fixées à une tête respective 30a de bras d'essuie-glace 3, par exemple par vissage.

En fonctionnement, la rotation de l'arbre de sortie 15 du moto-réducteur 1 entraîne le pivotement de la manivelle moteur 38 autour de l'axe de l'arbre de sortie 15. La manivelle moteur 38 entraîne le déplacement des biellettes 40, 42 qui entraîne le pivotement des leviers 44, 46 autour de leurs deuxièmes extrémités respectives, pour entraîner le pivotement des balais d'essuie-glace 32.

Le moto-réducteur 1 comprend également une plaque de fixation 11 configurée pour maintenir le moto-réducteur 1 et éventuellement le tube support 36. La plaque de fixation 11 est destinée à être fixée à un élément de structure du véhicule. Le tube support 36 peut également être fixé à un élément de structure au niveau de ses embouts 36a et 36b. Alternativement, la plaque de fixation 11 peut être fixée au tube support 36, le moto-réducteur 1 étant alors fixée à la plaque de fixation 11. Dans ce cas, le tube support 36 est fixé à un élément de structure du véhicule, par exemple via ses embouts 36a et 36b.

La figure 2 représente un schéma d'un moto-réducteur 1 selon un premier type similaire au moto-réducteur 1 présenté sur la figure 1 comprenant un moteur électrique 3 logé dans une carcasse 4, par exemple de forme cylindrique, et un mécanisme réducteur 5 relié au moteur électrique 3. Le moto-réducteur 1 comprend également un socle 9 dans lequel est ménagé un logement destiné à recevoir le mécanisme réducteur 5. Le socle 9 et la carcasse 4 du moteur électrique 3 sont fixés mécaniquement l'un à l'autre, par exemple via des vis ou par soudure ou tout moyen de fixation connu de l'homme du métier.

Pour certains types de moto-réducteurs 1, par exemple dans le cas de système d'essuie-glace arrière, le socle 9 peut également recevoir un système bielle-manivelle intégré.

Le moto-réducteur 1 comprend également une plaque de fixation 11 destinée à être fixée au socle 9 d'une part et d'autre part à un élément de structure du véhicule ou un élément fixe par rapport à la structure du véhicule. La plaque de fixation 11 est par exemple fixée au socle 9 par le biais de vis 14, au nombre de trois dans le cas de la figure 2. La plaque de fixation 11 peut avoir des formes variées en fonction du modèle du moto-réducteur 1 et de la forme de l'élément de structure du véhicule sur lequel elle est fixée, notamment une forme plane et rectangulaire dans le cas présent. La plaque de fixation 11 peut également comprendre un orifice central 13 à travers lequel s'étend l'arbre de sortie 15 du moto-réducteur 1.

La plaque de fixation 11 comprend également des ouvertures 16, trois dans le cas présent, pour permettre sa fixation sur un élément de structure du véhicule. Les moyens de fixation de la plaque de fixation 11 sur l'élément de structure du véhicule comprennent par exemple des vis, trois dans le cas présent, qui viennent s'insérer dans les ouvertures 16 de la plaque de fixation 11. Les ouvertures 16 sont par exemple situées sur la périphérie de la plaque de fixation 11 et peuvent être réalisés par des trous ou des encoches, par exemple en forme de demi-lune.

Cependant, l'emplacement et le nombre de ces ouvertures 16 peut varier en fonction de la forme de la plaque de fixation 11 et de la forme de l'élément de structure du véhicule sur lequel est fixée la plaque de fixation 11.

Les moyens de fixation de la plaque de fixation 11 sur un élément de structure du véhicule, peuvent également comprendre des plots amortisseurs 18 positionnés à l'interface entre la plaque de fixation 11 et l'élément de structure du véhicule pour filtrer les vibrations.

Afin d'améliorer le découplage entre l'intérieur du moto-réducteur 1 et la structure du véhicule et réduire la propagation des bruits et vibrations entre le mécanisme réducteur 5 et la structure du véhicule, au moins un des éléments intermédiaires entre le moteur électrique 3 et un élément de structure du véhicule, c'est-à-dire au moins un des éléments parmi la carcasse 4 du moteur électrique 3, le socle 9 et la plaque de fixation 11 comprend ou est réalisé par un matériau composite feuilleté 39 comprenant au moins deux couches dont au moins une des couches est réalisée dans un matériau viscoélastique, c'est-à-dire un matériau ayant un facteur de perte important.

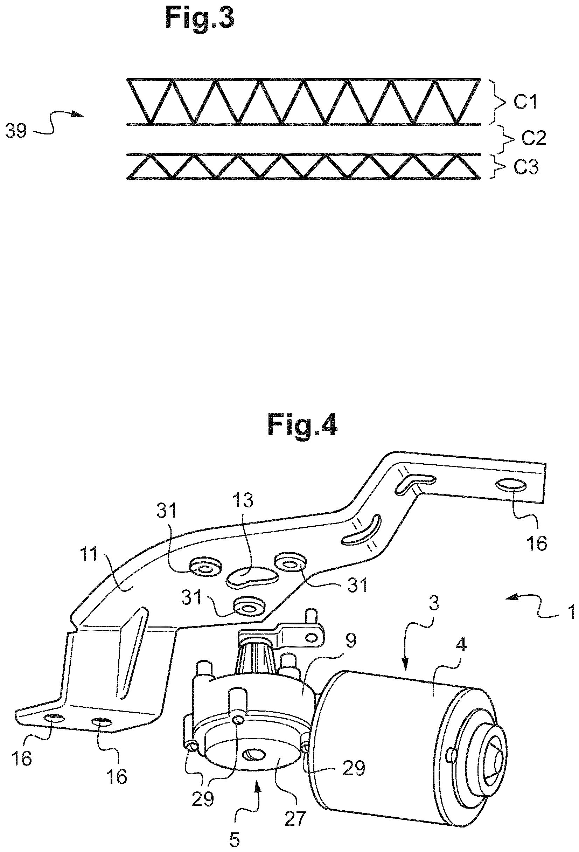

La figure 3 représente les différentes couches d'un matériau composite feuilleté 39 selon un mode de réalisation comprenant trois couches, deux couches extérieures notées C1 et C3 et une couche intermédiaire C2. La couche intermédiaire C2 est réalisée dans un matériau viscoélastique, c'est à dire un matériau ayant un facteur de perte tangente δ supérieur à 0,1 à 200Hz, pour une température comprise dans une plage de 20 à 80°C et dans des conditions de sollicitation vibratoire de type moteur d'essuie-vitre. Le facteur de perte, aussi appelé facteur d'amortissement, est une mesure du rapport de l'énergie dissipée par amortissement à l'énergie élastique conservée. Ce matériau viscoélastique est par exemple un élastomère et le rapport entre l'épaisseur de la couche intermédiaire et celle de la couche externe la moins épaisse est par exemple compris entre 0,03 et 0,6.

Les couches extérieures C1 et C3 sont réalisées dans un matériau dont la raideur dynamique et statique sera beaucoup plus forte que celle du matériau viscoélastique, c'est-à-dire dans un matériau ayant un facteur d'amortissement inférieur à 0,1 dans les conditions décrites précédemment, comme par exemple un métal tel que l'acier ou un alliage acier/aluminium ou un plastique dur. Le rôle des couches extérieures C1 et C3 est d'assurer une rupture d'impédance ou de raideur dynamique avec la couche intermédiaire C2 en matériau viscoélastique qui est prise en « sandwich » entre les couches extérieures C1 et C3, ce qui permet de filtrer les vibrations et le bruit en transmission. Les deux couches extérieures C1 et C3 peuvent être du même matériau ou d'un matériau différent.

De manière préférentielle, l'une au moins des couches du matériau composite feuilleté 39 est métallique de manière à former une barrière pour les ondes électromagnétiques et améliorer la compatibilité électro-magnétique entre le moteur électrique 3 et/ou le mécanisme réducteur 5 et les autres éléments du véhicule.

De manière préférentielle également, si plusieurs couches du matériau composite feuilleté 39 sont réalisées dans la même matière alors leurs épaisseurs sont différentes, par exemple l'une des couches extérieures C1, C3 est au moins deux fois plus épaisse que l'autre, de manière à optimiser le découplage sur la plage de fréquence visée pour le découplage entre le moto-réducteur 1 et la structure du véhicule et ainsi obtenir une faible transparence acoustique du ou des éléments comprenant le matériau composite feuilleté 39 dans une plage de fréquence donnée. Cette optimisation du découplage permet de réduire la transmission du bruit à travers ces éléments. Par exemple si les deux couches extérieures C1 et C3 sont réalisées en acier, leur épaisseur sera différente, par exemple 1mm pour la couche C1 et 2mm pour la couche C3.

Les différentes matières constituant le matériau composite feuilleté 39 ainsi que leur épaisseur peuvent être choisis en fonction des fréquences pour lesquelles on recherche un fort découplage, par exemple la ou les fréquences de résonance du moto-réducteur 1.

La composition du matériau composite feuilleté 39 utilisé dans l'un des éléments du moto-réducteur 1 ne se limite pas au matériau composite feuilleté 39 présenté sur la figure 3 mais s'étend à tout matériau composite feuilleté 39 comprenant au moins une couche réalisée dans un matériau viscoélastique et au moins une couche rigide permettant d'assurer la rigidité du moto-réducteur 1 lors de son utilisation. Le matériau composite feuilleté 39 peut par exemple comprendre cinq couches dont trois couches intermédiaires comprenant deux couches réalisées en matériau viscoélastique séparée par une troisième couche formée d'un matériau plus rigide et deux couches extérieures formée également d'un matériau plus rigide.

En effet, de manière préférentielle si plusieurs couches de matériau viscoélastique sont utilisées, elles seront séparées par une couche intermédiaire plus rigide.

La figure 4 représente un schéma d'un moto-réducteur 1 du même type que le moto-réducteur 1 présenté sur les figures 1 et 2 mais dont la forme de la plaque de fixation 11 est différente et dont les ouvertures 16 sont réalisées par des trous. De plus, le moto-réducteur 1 comprend un capot 27 (non visible sur la figure 1) qui vient se fixer sur le socle 9, par exemple par le biais de vis de fixation 29, trois dans le présent cas, pour fermer le logement du socle 9 renfermant le mécanisme réducteur 5. Le socle 9 et le capot 27 forment alors un carter du mécanisme réducteur 5. Dans ce cas, le capot 27 peut également comprendre un matériau composite feuilleté 39 tel que décrit précédemment. Les autres caractéristiques sont identiques au moto-réducteur 1 des figures 1 et 2.

Les moyens de fixation de la plaque de fixation 11 à un élément de structure du véhicule restent également les mêmes que précédemment puisque les ouvertures 16 sous forme de trous, au nombre de trois dans le cas présent, sont destinés à recevoir des vis de fixation et éventuellement des plots amortisseurs 18.

De plus, la figure 4 représente des orifices de fixation 31, trois dans le cas présent, permettant la fixation du socle 9 sur la plaque de fixation 11. Ces orifices de fixation 31 sont disposés autour de l'orifice central 13 destiné à recevoir l'arbre de sortie 15 du moto-réducteur 1 et sont destinés à recevoir les vis de fixation 14 représentées sur la figure 2.

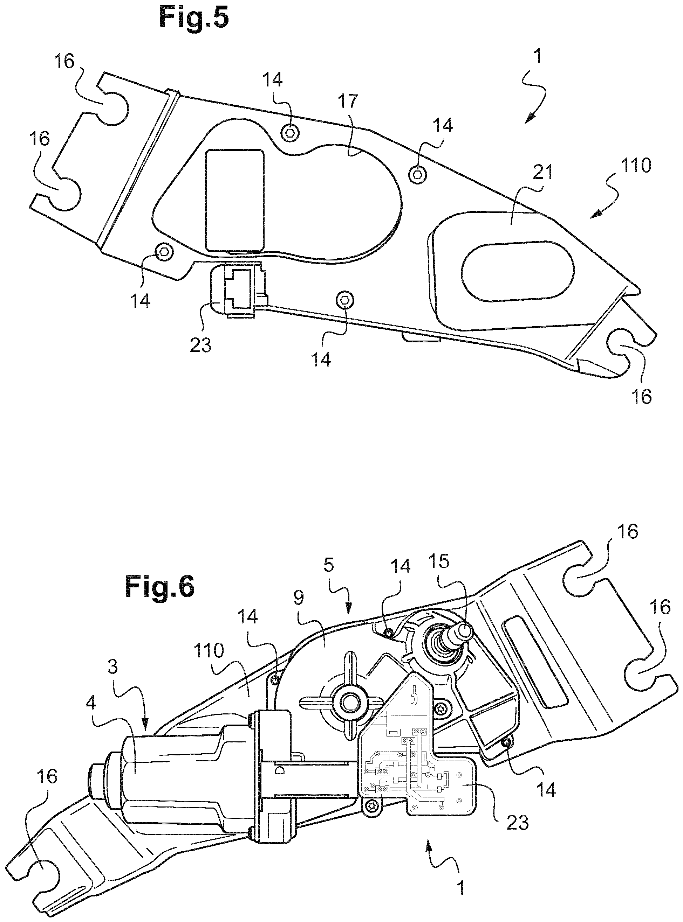

Les figures 5 et 6 représentent un moto-réducteur 1 selon un deuxième type comprenant une plaque de fermeture 110 destinée d'une part à être fixée au socle 9 pour fermer le logement dans lequel se trouve le mécanisme réducteur 5 et d'autre part à être fixée à un élément de structure du véhicule. Ainsi, la plaque de fermeture 110 remplace la plaque de fixation 11 et éventuellement le capot 27 du premier type de moto-réducteur 1 présenté précédemment.

La figure 5 représente une première face de la plaque de fermeture 110 correspondant à la face externe, c'est-à-dire la face opposée au mécanisme réducteur 5. La plaque de fermeture 110 peut présenter différentes formes en fonction du modèle du moto-réducteur 1 et de l'élément de structure du véhicule sur lequel elle est fixée.

Sur la figure 5, la plaque de fermeture comprend un premier renfoncement 17 correspondant à l'emplacement du mécanisme réducteur 5 et un deuxième renfoncement 21 correspondant à l'emplacement de la fixation du moteur électrique 3.

La carcasse 4 du moteur électrique 3 et le socle 9 renfermant le mécanisme réducteur sont mieux visibles sur la figure 6 qui représente une deuxième face de la plaque de fermeture 110 correspondant à la face interne, c'est-à-dire la face contre laquelle vient se fixer le socle 9, la plaque de fermeture 110 fermant ainsi le logement dans lequel se trouve le mécanisme réducteur 5.

La fixation de la plaque de fermeture 110 avec le socle 9 est réalisée par exemple par des vis 14, au nombre de quatre dans le cas présent. Le moto-réducteur 1 comprend également un connecteur 23 pour assurer la connexion électrique du moto-réducteur 1 avec une alimentation électrique du véhicule (un connecteur est également présent dans le premier type de moto-réducteur mais n'était pas représenté sur les figures 1, 2 et 4).

Pour permettre la fixation du moto-réducteur 1 sur un élément de structure du véhicule, la plaque de fermeture 110 comprend également un dispositif de fixation permettant éventuellement de positionner des plots amortisseurs. Dans le cas présent, ce dispositif de fixation est similaire à celui de la plaque de fixation décrit précédemment et est réalisé par trois ouvertures 16 formées par des encoches au niveau des extrémités de la plaque de fermeture 110. L'emplacement, la forme et le nombre de ces ouvertures 16 peut varier en fonction de la forme de la plaque de fermeture 110 et de la forme de l'élément de structure du véhicule sur lequel elle est fixée. Par ailleurs, les ouvertures 16 peuvent également être réalisées sous forme de trous puisque la fixation peut aussi se faire par des vis.

De plus, afin d'améliorer le découplage entre le moto-réducteur 1 et la structure du véhicule et réduire la propagation des bruits et vibrations entre le mécanisme réducteur 5 et la structure du véhicule, la plaque de fermeture 110 peut comprendre un matériau composite feuilleté 39 tel que décrit précédemment.

L'utilisation d'un matériau composite feuilleté 39 pour au moins l'un des éléments intermédiaire entre le moteur électrique 3 et la structure du véhicule, en particulier pour la plaque de fixation 11 ou la plaque de fermeture 110 qui assure la liaison entre le moto-réducteur 1 et la structure du véhicule permet donc d'améliorer le découplage vibratoire entre entre le moto-réducteur 1 et la structure du véhicule. L'utilisation d'un matériau composite feuilleté 39 peut être couplée à l'utilisation de plots amortisseurs 18.

De manière alternative, si le découplage procuré par le matériau composite feuilleté 39 est suffisant et correspond au découplage vibratoire recherché, la plaque de fixation 11 ou la plaque de fermeture 110 suivant le type de moto-réducteur 1 peut alors être fixée directement sur l'élément de structure du véhicule sans utiliser de plots amortisseurs 18. Dans ce cas, seule la plaque de fixation 11 ou la plaque de fermeture 110 assure le découplage mécanique et permet l'atténuation des vibrations. Le fait de se passer des plots amortisseurs 18 permet alors de simplifier le montage et de réduire le nombre de pièces nécessaires au moto-réducteur 1 ce qui permet de simplifier la logistique liée aux pièces. L'utilisation de matériau composite feuilleté pour les autres éléments du moto-réducteur 1 comme la carcasse 4 du moteur électrique 3 ou le socle 9 permet non seulement d'améliorer encore le découplage vibratoire mais aussi d'atténuer la transmission des bruits émis par le moteur électrique 3 ou le mécanisme réducteur 5.

Ainsi, l'utilisation pour au moins l'un des éléments constitutifs du moto-réducteur 1 d'un matériau composite feuilleté 39 dont au moins une des couches est réalisée en matériau viscoélastique permet de créer un découplage mécanique permettant d'atténuer les vibrations transmises entre le moto-réducteur 1 et la structure du véhicule ce qui permet d'améliorer le filtrage des vibrations réalisé par les plots amortisseurs 18 ou éventuellement de se passer des plots amortisseurs 18. De plus, l'utilisation d'un tel matériau ne complique pas le montage du moto-réducteur 1 et peut donc facilement introduit dans une fabrication en grande série. L'utilisation d'un matériau composite feuilleté 39 permet également de diminuer la transparence acoustique, c'est-à-dire d'augmenter l'isolement acoustique, du moto-réducteur 1 et d'améliorer la compatibilité électro-magnétique lorsque l'une des couches du matériau composite feuilleté est métallique.

## Revendications

1. Moto-réducteur (1) pour système d'essuyage de véhicule automobile, le moto-réducteur comprenant :
- un moteur électrique (3) logé dans une carcasse (4),
- un mécanisme réducteur (5) relié au moteur électrique (3),
- un socle (9) recevant le mécanisme réducteur (5),
- une plaque de fixation (11) et/ou une plaque de fermeture (110) destinée à être fixée d'une part au socle (9) et d'autre part à un élément de structure du véhicule,
**caractérisé en ce que** au moins un élément parmi :
- la plaque de fixation (11),
- la plaque de fermeture (110),
- le socle (9) et,
- la carcasse (4),
est constitué d'un matériau composite feuilleté (39) comprenant au moins deux couches (C1, C2, C3) de matériau et dont au moins une des couches (C2) est réalisée dans un matériau viscoélastique.

2. Moto-réducteur (1) selon la revendication 1 dans lequel le matériau composite feuilleté (39) comprend une première et une deuxième couches externes (C1, C3) et au moins une couche intermédiaire (C2) en matériau viscoélastique.

3. Moto-réducteur (1) selon la revendication 2 dans lequel le matériau viscoélastique a un facteur d'amortissement tangente δ supérieur à 0,1 à 200 Hz dans une plage de température comprise entre 20 et 80°C, la première et la deuxième couches externes ayant un facteur d'amortissement tangente δ inférieur à 0,1 à 200 Hz dans une plage de température comprise entre 20 et 80°C.

4. Moto-réducteur (1) selon l'une des revendications 2 à 3 dans lequel le rapport entre l'épaisseur de la couche intermédiaire (C2) et celle de la couche externe (C1, C3) la moins épaisse sera comprise entre 0,03 et 0,6.

5. Moto-réducteur (1) selon l'une des revendications 2 à 4 dans lequel la première (C1) et la deuxième (C3) couches externes ont des épaisseurs différentes.

6. Moto-réducteur (1) selon la revendication 5 dans lequel l'une des couches externes (C1, C3) est au moins deux fois plus épaisse que l'autre.

7. Moto-réducteur (1) selon l'une des revendications 1 à 6 dans lequel au moins une des couches (C1, C2, C3) est métallique.

8. Moto-réducteur (1) selon la revendication 7 dans lequel au moins une des couches (C1, C2, C3) est en acier ou en alliage acier/aluminium.

9. Moto-réducteur (1) selon l'une des revendications précédentes dans lequel la plaque de fixation (11) ou la plaque de fermeture (110) comprend au moins une ouverture (16) pour permettre la fixation de ladite plaque de fixation (11) ou de ladite plaque de fermeture (110) a un élément de structure du véhicule automobile.

10. Moto-réducteur (1) selon l'une des revendications précédentes dans lequel la plaque de fermeture (110) est fixée au socle (9) et ferme un logement du socle (9) dans lequel est placé le mécanisme réducteur (5).

11. Moto-réducteur (1) selon l'une des revendications 1 à 9 comprenant également un capot (27) fixée au socle (9) pour fermer le logement du socle (9) dans lequel est placé le mécanisme réducteur (5) et dans lequel la plaque de fixation (11) est fixée au socle (9) ou au capot (27), ledit capot (27) comprenant un matériau composite feuilleté (39) dont au moins une des couche est réalisée dans un matériau viscoélastique.

## Patentansprüche

1. Getriebemotor (1) für ein Wischsystem eines Kraftfahrzeugs, wobei der Getriebemotor aufweist:
- einen Elektromotor (3), der in einem Gehäuse (4) untergebracht ist,
- einen Untersetzungsmechanismus (5), der mit dem Elektromotor (3) verbunden ist,
- eine Basis (9), die den Untersetzungsmechanismus (5) aufnimmt,
- eine Befestigungsplatte (11) und/oder eine Verschlussplatte (110), die dazu bestimmt ist, einerseits an der Basis (9) und andererseits an einem Strukturelement des Fahrzeugs befestigt zu werden,
**dadurch gekennzeichnet, dass** mindestens ein Element unter:
- der Befestigungsplatte (11),
- der Verschlussplatte (110),
- der Basis (9) und
- dem Gehäuse (4)
aus einem laminierten Verbundmaterial (39) hergestellt ist, das mindestens zwei Schichten (C1, C2, C3) aus Material umfasst, wovon mindestens eine der Schichten (C2) aus einem viskoelastischen Material hergestellt ist.

2. Getriebemotor (1) nach Anspruch 1, wobei das laminierte Verbundmaterial (39) eine erste und eine zweite Außenschicht (C1, C3) und mindestens eine Zwischenschicht (C2) aus viskoelastischem Material aufweist.

3. Getriebemotor (1) nach Anspruch 2, wobei das viskoelastische Material einen Dämpfungsfaktor der Tangente δ von größer als 0,1 bis 200 Hz in einem Temperaturbereich zwischen 20 und 80 °C aufweist, wobei die erste und die zweite Außenschicht einen Dämpfungsfaktor der Tangente δ von weniger als 0,1 bei 200 Hz in einem Temperaturbereich zwischen 20 und 80 °C aufweist.

4. Getriebemotor (1) nach einem der Ansprüche 2 bis 3, wobei das Verhältnis zwischen der Dicke der Zwischenschicht (C2) und jener der dünnsten Außenschicht (C1, C3) zwischen 0,03 und 0,6 betragen wird.

5. Getriebemotor (1) nach einem der Ansprüche 2 bis 4, wobei die erste (C1) und die zweite (C3) Außenschicht verschiedene Dicken aufweisen.

6. Getriebemotor (1) nach Anspruch 5, wobei eine der Außenschichten (C1, C3) mindestens zweimal so dick ist wie die andere.

7. Getriebemotor (1) nach einem der Ansprüche 1 bis 6, wobei mindestens eine der Schichten (C1, C2, C3) aus Metall besteht.

8. Getriebemotor (1) nach Anspruch 7, wobei mindestens eine der Schichten (C1, C2, C3) aus Stahl oder aus Stahl-/Aluminiumlegierung besteht.

9. Getriebemotor (1) nach einem der vorhergehenden Ansprüche, wobei die Befestigungsplatte (11) oder die Verschlussplatte (110) mindestens eine Öffnung (16) aufweist, um das Befestigen der Befestigungsplatte (11) oder der Verschlussplatte (110) an einem Strukturelement des Kraftfahrzeugs zu ermöglichen.

10. Getriebemotor (1) nach einem der vorhergehenden Ansprüche, wobei die Verschlussplatte (110) an der Basis (9) befestigt ist und eine Aufnahme der Basis (9) schließt, in der der Untersetzungsmechanismus (5) angeordnet ist.

11. Getriebemotor (1) nach einem der Ansprüche 1 bis 9, ebenfalls umfassend eine Abdeckung (27), die an der Basis (9) befestigt ist, um die Aufnahme der Basis (9) zu schließen, in der der Untersetzungsmechanismus (5) angeordnet ist und in der die Befestigungsplatte (11) an der Basis (9) oder an der Abdeckung (27) befestigt ist, wobei die Abdeckung (27) ein laminiertes Verbundmaterial (39) aufweist, wovon mindestens eine der Schichten aus einem viskoelastischen Material hergestellt ist.

## Claims

1. Geared motor unit (1) for a motor vehicle wiper system, the geared motor unit comprising:
- an electric motor (3) housed in a casing (4),
- a reduction gear mechanism (5) connected to the electric motor (3),
- a mount (9) receiving the reduction gear mechanism (5),
- a fixing plate (11) and/or a closure plate (110) intended to be fixed on the one hand to the mount (9) and on the other hand to a structural element of the vehicle,
**characterized in that**, out of the following elements:
- the fixing plate (11),
- the closure plate (110),
- the mount (9), and
- the casing (4),
at least one is made of a laminated composite material (39) comprising at least two layers (C1, C2, C3) of material and of which at least one of the layers (C2) is made from a viscoelastic material.

2. Geared motor unit (1) according to Claim 1, in which the laminated composite material (39) comprises a first and a second outer layer (C1, C3) and at least one intermediate layer (C2) made of viscoelastic material.

3. Geared motor unit (1) according to Claim 2, in which the viscoelastic material has a damping coefficient tan δ greater than 0.1 at 200 Hz in a temperature range of between 20 and 80°C, the first and second outer layers having a damping coefficient tan δ less than 0.1 at 200 Hz in a temperature range of between 20 and 80°C.

4. Geared motor unit (1) according to one of Claims 2 and 3, in which the ratio between the thickness of the intermediate layer (C2) and the least thick of the outer layers (C1, C3) will be between 0.03 and 0.6.

5. Geared motor unit (1) according to one of Claims 2 to 4, in which the first (C1) and second (C3) outer layers have different thicknesses.

6. Geared motor unit (1) according to Claim 5, in which one of the outer layers (C1, C3) is at least twice the thickness of the other.

7. Geared motor unit (1) according to one of Claims 1 to 6, in which at least one of the layers (C1, C2, C3) is metallic.

8. Geared motor unit (1) according to Claim 7, in which at least one of the layers (C1, C2, C3) is made of steel or a steel/aluminium alloy.

9. Geared motor unit (1) according to one of the preceding claims, in which the fixing plate (11) or the closure plate (110) comprises at least one opening (16) to allow the said fixing plate (11) or the said closure plate (110) to be fixed to a structural element of the motor vehicle.

10. Geared motor unit (1) according to one of the preceding claims, in which the closure plate (110) is fixed to the mount (9) and closes a housing in the mount (9) in which the reduction gear mechanism (5) is placed.

11. Geared motor unit (1) according to one of Claims 1 to 9 also comprising a cover (27) fixed to the mount (9) to close the housing in the mount (9) in which the reduction gear mechanism (5) is placed, and in which the fixing plate (11) is fixed to the mount (9) or to the cover (27), the said cover (27) comprising a laminated composite material (39) at least one of the layers of which is made of a viscoelastic material.
